# EUROPÄISCHE PATENTSCHRIFT

(11) **EP 2 740 691 B1**
(45) Veröffentlichungstag und Bekanntmachung des Hinweises auf die Patenterteilung: **11.05.2016**
(21) Anmeldenummer: 13187642.7
(22) Anmeldetag: 08.10.2013
(51) Int. Cl.: B65G 65/46, G01F 13/00

(54) **Dosiervorrichtung für Schüttgut**
Dosing device for bulk material
Dispositif de dosage pour des matériaux en vrac

(30) Priorität: 05.12.2012 DE 102012222335
(43) Veröffentlichungstag der Anmeldung: 11.06.2014
(73) Patentinhaber: ROBERT BOSCH GMBH, 70442 Stuttgart (DE)
(72) Erfinder: Meissner, Dirk, 73650 Winterbach (DE); Gottselig, Matthias, 74177 Bad Friedrichshall (DE)

(56) Entgegenhaltungen:
- EP-A1- 1 338 510
- DE-C2- 4 447 051
- US-A- 4 805 673
- US-A- 5 327 947

## Beschreibung

### Stand der Technik

Die vorliegende Erfindung betrifft eine Dosiervorrichtung für pulvrige und schüttfähige Güter.

Der Stand der Technik kennt Dosiervorrichtungen mit einem trichterförmigen Behälter. Mittels einer Dosierschnecke wird das Schüttgut aus dem Behälter nach außen gefördert. In dem Behälter ist ein Rührwerk angeordnet, um eine homogene Zuführung des Produktes zu ermöglichen. Die Dosierschnecke und/ oder das Rührwerk werden üblicherweise über Riemen- oder Kettenantriebe angetrieben. Dabei werden zwei unterschiedliche Anordnungen zum Antrieb des Rührwerks und der Dosierschnecke verwendet. Der herkömmliche Aufbau ist relativ groß bauend und muss aus einer Vielzahl an Einzelteilen zusammengesetzt werden.

US 4,805,673 zeigt eine Dosiervorrichtung nach dem Oberbegriff des Anspruchs 1. Weiterer relevanter Stand der Technik ist der US 5,327,947 zu entnehmen.

### Offenbarung der Erfindung

Die erfindungsgemäße Dosiervorrichtung weißt einen direkten und kompakten Aufbau des Rührwerks und der Dosierschnecke auf. Dadurch kann auf unnötige Antriebselemente, wie beispielsweise Riemen- oder Kettenantriebe verzichtet werden und die Komplexität der Dosiervorrichtung und der Wartungsaufwand reduzieren sich. Gleichzeitig ist ein möglichst hygieneoptimiertes Design möglich, da die Oberflächen reduziert sind und möglichst wenig Hohlräume, beispielsweise an Welle-Nabe Verbindungen, entstehen. Diese Vorteile werden erreicht durch eine Dosiervorrichtung mit den Merkmalen des Anspruches 1. Die Dosiervorrichtung umfasst einen Behälter zur Aufnahme von pulvrigen oder schüttfähigen Gütern. Die pulvrigen oder schüttfähigen Güter werden hier vereinfacht als Schüttgut" bezeichnet. An dem Behälter ist eine Auslassöffnung ausgebildet. Des Weiteren ist eine Dosierschnecke vorgesehen. Die Dosierschnecke ragt aus dem Behälter durch die Auslassöffnung hindurch. Dadurch kann mit der Dosierschnecke das Schüttgut aus dem Behälter in einer definierten Menge nach außen gefördert werden. Des Weiteren weist die Dosiervorrichtung ein im Behälter angeordnetes Rührwerk auf. Das Rührwerk vermischt stets das Schüttgut im Behälter, so dass eine homogene Mischung vorliegt. Die Dosierschnecke weist eine erste Antriebswelle auf. Das Rührwerk weist eine zweite Antriebswelle auf. Auf dem Behälter ist ein Antriebsgehäuse aufgesetzt. Die beiden Antriebswellen ragen in das Antriebsgehäuse. An das Antriebsgehäuse ist ein erster Elektromotor angeflanscht. Der erste Elektromotor dient zum Antrieb der ersten Antriebswelle. Des Weiteren ist an das Antriebsgehäuse ein zweiter Elektromotor angeflanscht. Der zweite Elektromotor dient zum Antrieb der zweiten Antriebswelle. Die Verwendung des einen Antriebsgehäuses mit den beiden angeflanschten Elektromotoren ermöglicht den sehr kompakten Aufbau der Dosiervorrichtung.

Die Unteransprüche zeigen bevorzugte Weiterbildungen der Erfindung.

Bevorzugt ist Vorgesehen, dass der erste Elektromotor über ein Stirnradgetriebe oder über ein Kegelradgetriebe oder über ein Schneckengetriebe mit der ersten Antriebswelle verbunden ist. Des Weiteren ist bevorzugt vorgesehen, dass der zweite Elektromotor über ein Stirnradgetriebe oder über ein Kegelradgetriebe oder über ein Schneckenradgetriebe mit der zweiten Antriebswelle verbunden ist. Die verwendeten Getriebe befinden sich entweder in dem Antriebsgehäuse oder können zumindest teilweise in die Gehäuse der Elektromotoren integriert sein. In besonders bevorzugter Ausführung ist vorgesehen, dass der erste Elektromotor über das Stirnradgetriebe mit der ersten Antriebswelle verbunden ist, und der zweite Elektromotor über das Kegelrad- oder Schneckengetriebe mit der zweiten Antriebswelle verbunden ist.

Bevorzugt ist vorgesehen, dass die beiden Antriebswellen konzentrisch zueinander angeordnet sind. Insbesondere ist eine der Antriebswellen als Hohlwelle ausgebildet. Die andere Antriebswelle befindet sich innerhalb der Hohlwelle.

Erfindungsgemäß ist vorgesehen, dass der Behälter mit einer Grundplatte verschlossen ist. Die beiden Antriebswellen ragen durch diese Grundplatte hindurch. Das Antriebsgehäuse ist auf der Grundplatte montiert.

Des Weiteren ist bevorzugt eine Zuführvorrichtung vorgesehen. Auch diese Zuführvorrichtung wird direkt auf die Grundplatte montiert. Die Zuführvorrichtung dient zum Zuführen des Schüttgutes in den Behälter. Insbesondere ist die Zuführvorrichtung als Querförderschnecke ausgebildet.

Der erste Elektromotor weist eine erste Ankerwelle auf. Der zweite Elektromotor weist eine zweite Ankerwelle auf. Die beiden Elektromotoren sind insbesondere so angeordnet, dass die beiden Ankerwellen senkrecht zueinander ausgerichtet sind. Insbesondere ist vorgesehen, dass die erste Ankerwelle des ersten Elektromotors koaxial zur ersten Antriebswelle steht.

Zwischen der ersten Antriebswelle und dem ersten Elektromotor ist bevorzugt eine Kupplung zum Ausgleich von axialem Versatz vorgesehen.

Der Behälter wird vorzugsweise trichterförmig ausgebildet. Die Auslassöffnung ist am kleinsten Durchmesser der Trichterform angeordnet. Am größten Durchmesser der Trichterform ist bevorzugt die Grundplatte aufgesetzt.

Insbesondere ist die Dosiervorrichtung vertikal angeordnet. Das heißt, die Dosierschnecke erstreckt sich in vertikaler Richtung. Demgemäß ist die Auslassöffnung unten an dem Behälter angeordnet.

### Kurze Beschreibung der Zeichnungen

Nachfolgend wird ein Ausführungsbeispiel der Erfindung unter Bezugnahme auf die begleitende Zeichnung im Detail beschrieben. Dabei zeigen:
- Figur 1: eine erfindungsgemäße Dosiervorrichtung gemäß einem Ausführungsbeispiel,
- Figur 2: ein erstes Detail der erfindungsgemäßen Dosiervorrichtung gemäß dem Ausführungsbeispiel,
- Figur 3: ein zweites Detail der erfindungsgemäßen Dosiervorrichtung gemäß dem Ausführungsbeispiel, und
- Figur 4: ein drittes Detail der erfindungsgemäßen Dosiervorrichtung gemäß dem Ausführungsbeispiel.

### Ausführungsform der Erfindung

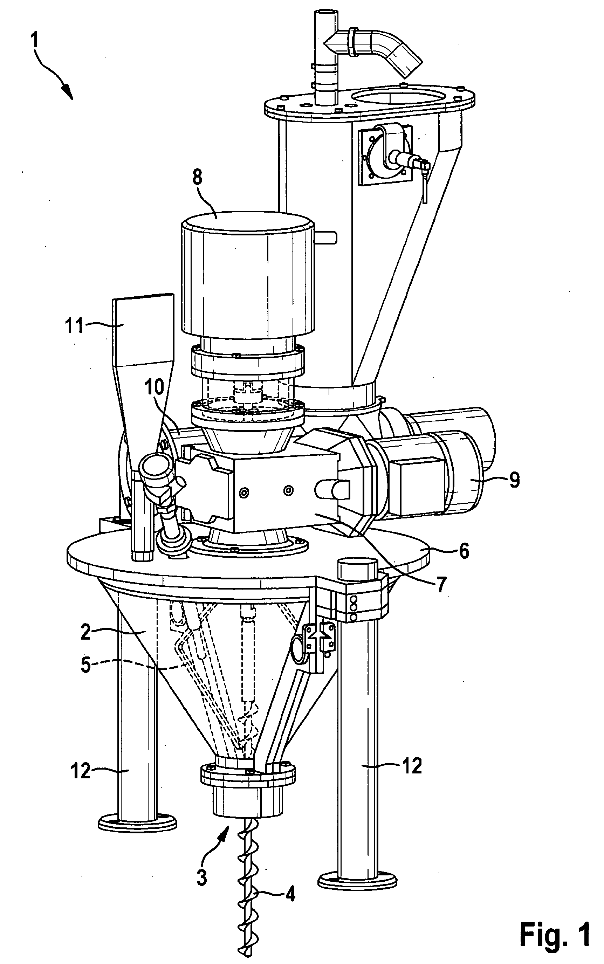

Nachfolgend wird anhand der Figuren 1 bis 4 eine Dosiervorrichtung 1 vorgestellt. Die Dosiervorrichtung 1 umfasst einen trichterförmigen Behälter 2. An der Unterseite des Behälters 2 ist eine Auslassöffnung 3 vorgesehen.

Eine Dosierschnecke 4 erstreckt sich aus dem Behälter 2 durch die Auslassöffnung 3 heraus. Mittels der Dosierschnecke 4 wird ein Schüttgut aus dem Behälter 2 befördert. Des Weiteren umfasst die Dosiervorrichtung 1 ein Rührwerk 5. Das Rührwerk 5 befindet sich innerhalb des Behälters 2.

An der Oberseite ist der Behälter 2 mittels einer Grundplatte 6 verschlossen. Auf der Grundplatte 6 ist ein Antriebsgehäuse 7 montiert. An dem Antriebsgehäuse 7 sind einer erster Elektromotor 8 und ein zweiter Elektromotor 9 angeflanscht.

Auf der Grundplatte 6 ist eine Zuführvorrichtung 10 montiert. Die Zuführvorrichtung 10 dient zum Zuführen eines Schüttgutes in den Behälter 3. Durch die Grundplatte 6 hindurch ragt eine Entlüftung 11. Die Entlüftung 11 umfasst eine Filtermembran. Die Entlüftung 11 ist insbesondere über einen Schlauch mit einem Zuführsilo verbunden.

Die Grundplatte 6 und somit die gesamte Dosiervorrichtung 1 steht auf höhenverstellbaren Maschinenfüßen 12.

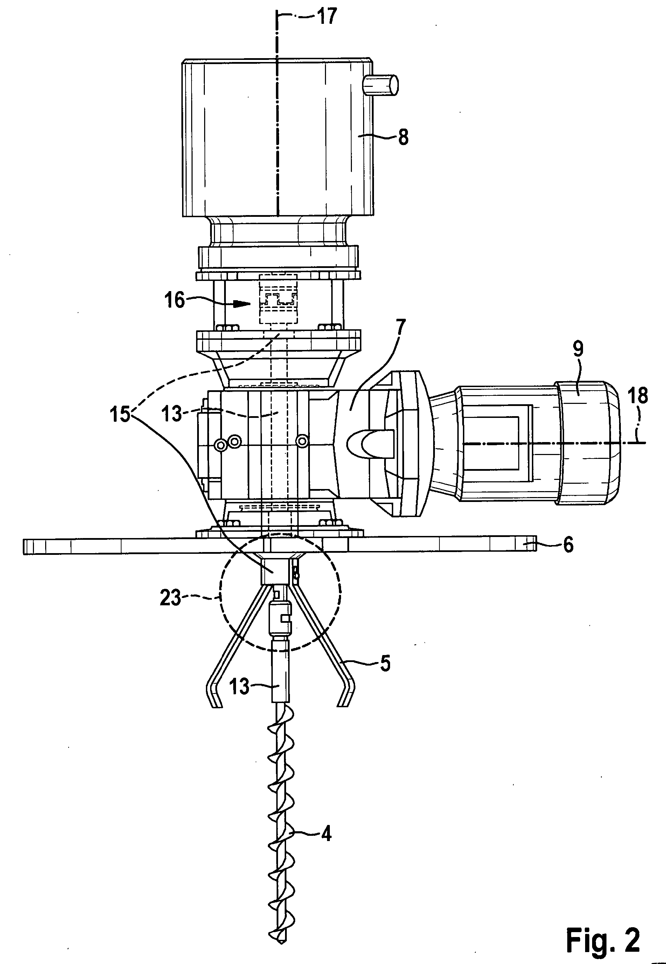

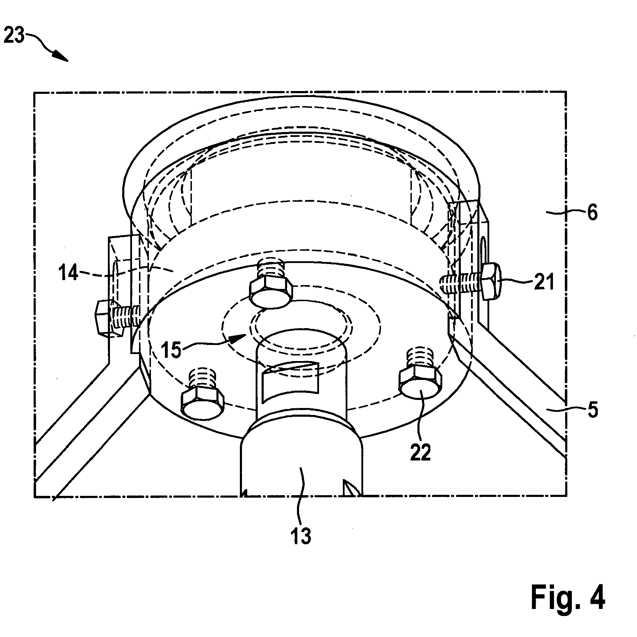

Figur 2 zeigt einen Ausschnitt der Dosiervorrichtung 1. Das Antriebsgehäuse 7 ist dabei transparent dargestellt. Gemäß Figur 2 weist die Dosierschnecke 4 eine erste Antriebswelle 13 auf. Das Rührwerk 5 weist eine zweite Antriebswelle 14 auf. Die zweite Antriebswelle 14 ist als Hohlwelle ausgebildet und in Figur 2 ausgeblendet. Zu sehen ist die als Hohlwelle ausgebildete zweite Antriebswelle 14 in Figur 4.

Ferner zeigt Figur 2 in schematischer Darstellung eine erste Ankerwelle 17 des ersten Elektromotors 8 und eine zweite Ankerwelle 18 des zweiten Elektromotors 9. Die beiden Ankerwellen 17, 18 stehen senkrecht zu einander.

Der erste Elektromotor 8 ist über eine Kupplung 16 mit der ersten Antriebswelle 13 verbunden. Ein nicht dargestelltes Stirnradgetriebe ist zwischen dem ersten Elektromotor 8 und der ersten Antriebswelle 13 vorgesehen. Die erste Ankerwelle 17 steht somit koaxial zur ersten Antriebswelle 13.

Die zweite Ankerwelle 18 steht senkrecht zu den beiden Antriebswellen 13, 14. Zwischen dem zweiten Elektromotor 9 und der zweiten Antriebswelle 14 ist ein nicht dargestelltes Kegelrad- oder Schneckengetriebe vorgesehen.

Die erste Antriebswelle 13 befindet sich innerhalb der als Hohlwelle ausgebildeten zweiten Antriebswelle 14 und ist an zwei Lagerstellen 15 gelagert.

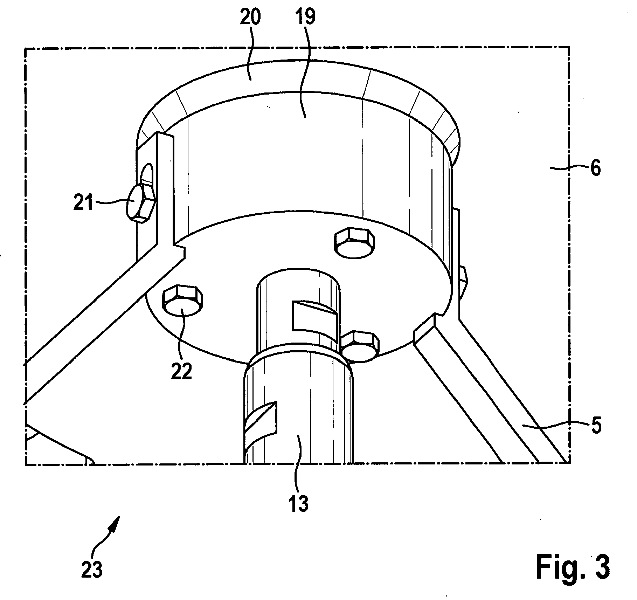

Die Figuren 3 und 4 zeigen das in Figur 2 gekennzeichnete Detail 23. Gemäß Figur 3 weißt das Rührwerk 5 einen Topf 19 auf. Mittels einer ersten Verschraubung 21 sind Rührarme des Rührwerks 5 an dem Topf 19 befestigt. Zwischen dem Topf 19 und der Unterseite der Grundplatte 6 ist eine Dichtung 20 angeordnet.

In Figur 4 ist der Übersichtlichkeit halber der Topf 19 ausgeblendet. Zu sehen ist die als Hohlwelle ausgebildete zweite Antriebswelle 14. Mittels der gezeigten zweiten Verschraubung 22 ist das Rührwerk 5, insbesondere der Topf 19, mit der zweiten Antriebswelle 14 verschraubt.

Die gezeigte Dosiervorrichtung 1 ermöglicht einen sehr kompakten Aufbau des Antriebs der beiden Antriebswellen 13, 14 und somit der Dosierschnecke 4 und des Rührwerkes 5. Durch die Anordnung des ersten Elektromotors 8 erfolgt eine direkte, zentrische Kraft- und Momenteinleitung auf die Dosierschnecke 4, so dass kein Moment die Konzentrizität mit der Dosierschnecke 4 beeinflusst.

Durch die Verwendung des zentralen Antriebsgehäuses 5 kann die Grundplatte 6 äußerst klein ausgestaltet werden.

## Patentansprüche

1. Dosiervorrichtung (1) für Schüttgut, umfassend
- einen Behälter (2) zur Aufnahme des Schüttguts mit einer Auslassöffnung (3),
- eine durch die Auslassöffnung (3) hindurchragende Dosierschnecke (4) mit einer ersten Antriebswelle (13),
- ein im Behälter (2) angeordnetes Rührwerk (5) mit einer zweiten Antriebswelle (14),
- ein auf dem Behälter (2) angeordnetes Antriebsgehäuse (7), wobei die erste und zweite Antriebswelle (13,14) in das Antriebsgehäuse (7) ragen,
- einen ersten an das Antriebsgehäuse (7) angeflanschten Elektromotor (8) zum Antrieb der ersten Antriebswelle (13), und
- einen zweiten an das Antriebsgehäuse (7) angeflanschten Elektromotor (9) zum Antrieb der zweiten Antriebswelle (14),
**dadurch gekennzeichnet, dass**
- der Behälter (2) mit einer Grundplatte (6) verschlossen ist, wobei die beiden Antriebswelle (13,14) durch die Grundplatte (6) hindurch ragen, und wobei das Antriebsgehäuse (7) auf der Grundplatte (6) montiert ist.

2. Dosiervorrichtung nach Anspruch 1, **dadurch gekennzeichnet, dass** der erste Elektromotor (8) über ein Stirnradgetriebe oder über ein Kegelradgetriebe oder über ein Schneckengetriebe mit der ersten Antriebswelle (13) verbunden ist, und/oder dass der zweite Elektromotor (9) über ein Stirnradgetriebe oder über ein Kegelradgetriebe oder über ein Schneckengetriebe mit der zweiten Antriebswelle (14) verbunden ist.

3. Dosiervorrichtung nach einem der vorhergehenden Ansprüche, **dadurch gekennzeichnet, dass** die erste Antriebswelle (13) und die zweiten Antriebswelle (14) konzentrisch zueinander angeordnet sind.

4. Dosiervorrichtung nach Anspruch 3, **dadurch gekennzeichnet, dass** die erste Antriebswelle (13) oder die zweite Antriebswelle (14) als Hohlwelle ausgebildet ist.

5. Dosiervorrichtung nach einem der vorhergehenden Ansprüche, **gekennzeichnet durch** eine Zuführvorrichtung (10), vorzugsweise eine Querförderschnecke, zum Zuführen des Schüttgutes in den Behälter (2), wobei die Zuführvorrichtung (10) auf der Grundplatte (6) montiert ist

6. Dosiervorrichtung nach einem der vorhergehenden Ansprüche, **dadurch gekennzeichnet, dass** eine erste Ankerwelle (17) des ersten Elektromotors (8) senkrecht zu einer zweiten Ankerwelle (18) des zweiten Elektromotors steht.

7. Dosiervorrichtung nach einem der vorhergehenden Ansprüche, **dadurch gekennzeichnet, dass** die erste Ankerwelle des ersten Elektromotors (8) koaxial zur ersten Antriebswelle (13) steht.

8. Dosiervorrichtung nach einem der vorhergehenden Ansprüche, **gekennzeichnet durch** eine Kupplung (16) zum Ausgleich von axialem Versatz zwischen der ersten Antriebswelle (13) und dem ersten Elektromotor (8).

9. Dosiervorrichtung nach einem der vorhergehenden Ansprüche, **dadurch gekennzeichnet, dass** der Behälter (2) trichterförmig ist, wobei die Auslassöffnung (3) am kleinsten Durchmesser der Trichterform angeordnet ist.

## Claims

1. Metering apparatus (1) for bulk material, comprising
- a container (2) for receiving the bulk material with an outlet opening (3),
- a metering worm (4) which protrudes through the outlet opening (3) and has a first drive shaft (13),
- a stirring unit (5) which is arranged in the container (2) and has a second drive shaft (14),
- a drive housing (7) which is arranged on the container (2), the first and second drive shaft (13, 14) protruding into the drive housing (7),
- a first electric motor (8) which is flange-connected to the drive housing (7) for driving the first drive shaft (13), and
- a second electric motor (9) which is flange-connected to the drive housing (7) for driving the second drive shaft (14),
**characterized in that**
- the container (2) is closed by way of a base plate (6), the two drive shafts (13, 14) protruding through the base plate (6), and the drive housing (7) being mounted on the base plate (6).

2. Metering apparatus according to Claim 1, **characterized in that** the first electric motor (8) is connected to the first drive shaft (13) via a spur gear mechanism or via a bevel gear mechanism or via a worm gear mechanism, and/or **in that** the second electric motor (9) is connected to the second drive shaft (14) via a spur gear mechanism or via a bevel gear mechanism or via a worm gear mechanism.

3. Metering apparatus according to either of the preceding claims, **characterized in that** the first drive shaft (13) and the second drive shaft (14) are arranged concentrically with respect to one another.

4. Metering apparatus according to Claim 3, **characterized in that** the first drive shaft (13) or the second drive shaft (14) is configured as a hollow shaft.

5. Metering apparatus according to one of the preceding claims, **characterized by** a feed apparatus (10), preferably a transverse conveying worm, for feeding the bulk material into the container (2), the feed apparatus (10) being mounted on the base plate (6).

6. Metering apparatus according to one of the preceding claims, **characterized in that** a first armature shaft (17) of the first electric motor (8) lies perpendicularly with respect to a second armature shaft (18) of the second electric motor.

7. Metering apparatus according to one of the preceding claims, **characterized in that** the first armature shaft of the first electric motor (8) lies coaxially with respect to the first drive shaft (13).

8. Metering apparatus according to one of the preceding claims, **characterized by** a clutch (16) for compensating for axial offset between the first drive shaft (13) and the first electric motor (8).

9. Metering apparatus according to one of the preceding claims, **characterized in that** the container (2) is funnel-shaped, the outlet opening (3) being arranged at the smallest diameter of the funnel shape.

## Revendications

1. Dispositif de dosage (1) pour des matériaux en vrac, comprenant
- un récipient (2) pour recevoir les matériaux en vrac, avec une ouverture de déchargement (3),
- une vis de dosage (4) traversant l'ouverture de déchargement (3), avec un premier arbre d'entraînement (13),
- un agitateur (5) disposé dans le récipient (2) avec un deuxième arbre d'entraînement (14),
- un boîtier d'entraînement (7) disposé sur le récipient (2), le premier et le deuxième arbre d'entraînement (13, 14) pénétrant dans le boîtier d'entraînement (7),
- un premier moteur électrique (8) bridé au boîtier d'entraînement (7) pour l'entraînement du premier arbre d'entraînement (13), et
- un deuxième moteur électrique (9) bridé au boîtier d'entraînement (7) pour l'entraînement du deuxième arbre d'entraînement (14),
**caractérisé en ce que**
- le récipient (2) est fermé par une plaque de base (6), les deux arbres d'entraînement (13, 14) pénétrant à travers la plaque de base (6) et le boîtier d'entraînement (7) étant monté sur la plaque de base (6).

2. Dispositif de dosage selon la revendication 1, **caractérisé en ce que** le premier moteur électrique (8) est connecté par le biais d'une transmission à pignons droits ou par le biais d'une transmission à pignons coniques ou par le biais d'une transmission à vis sans fin au premier arbre d'entraînement (13), et/ou **en ce que** le deuxième moteur électrique (9) est connecté par le biais d'une transmission à pignons droits ou par le biais d'une transmission à pignons coniques ou par le biais d'une transmission à vis sans fin au deuxième arbre d'entraînement (14).

3. Dispositif de dosage selon l'une quelconque des revendications précédentes, **caractérisé en ce que** le premier arbre d'entraînement (13) et le deuxième arbre d'entraînement (14) sont disposés concentriquement l'un par rapport à l'autre.

4. Dispositif de dosage selon la revendication 3, **caractérisé en ce que** le premier arbre d'entraînement (13) ou le deuxième arbre d'entraînement (14) est réalisé sous forme d'arbre creux.

5. Dispositif de dosage selon l'une quelconque des revendications précédentes, **caractérisé par** un dispositif d'alimentation (10), de préférence une vis sans fin d'alimentation transversale, pour l'alimentation des matériaux en vrac dans le récipient (2), le dispositif d'alimentation (10) étant monté sur la plaque de base (6).

6. Dispositif de dosage selon l'une quelconque des revendications précédentes, **caractérisé en ce qu'**un premier arbre d'induit (17) du premier moteur électrique (8) est perpendiculaire à un deuxième arbre d'induit (18) du deuxième moteur électrique.

7. Dispositif de dosage selon l'une quelconque des revendications précédentes, **caractérisé en ce que** le premier arbre d'induit du premier moteur électrique (8) est coaxial au premier arbre d'entraînement (13).

8. Dispositif de dosage selon l'une quelconque des revendications précédentes, **caractérisé par** un accouplement (16) pour compenser le décalage axial entre le premier arbre d'entraînement (13) et le premier moteur électrique (8).

9. Dispositif de dosage selon l'une quelconque des revendications précédentes, **caractérisé en ce que** le récipient (2) est en forme d'entonnoir, l'ouverture de déchargement (3) étant disposée au niveau du plus petit diamètre de la forme en entonnoir.
